# EUROPEAN PATENT APPLICATION

(11) **EP 4 089 796 A1**
(43) Date of publication of application: **16.11.2022**
(21) Application number: 21826108.9
(22) Date of filing: 17.06.2021
(51) Int. Cl.: H01M 10/643, H01M 10/625, H01M 10/613, H01M 50/20, H01M 50/502

(54) **BATTERY MODULE, BATTERY PACK COMPRISING SAME, VEHICLE, AND METHOD FOR MANUFACTURING BATTERY PACK**

(30) Priority: 17.06.2020 KR 20200073905
(71) Applicant: LG Energy Solution, Ltd., Seoul 07335 (KR)
(72) Inventor: CHOI, Bum, Daejeon 34122 (KR); KEUM, Jong-Yoon, Daejeon 34122 (KR); SHIN, Dong-Hwan, Daejeon 34122 (KR)
(74) Representative: Plasseraud IP
(86) International application number: PCT/KR2021/007627
(87) International publication number: WO 2021/256878

(57) **Abstract**

Disclosed are a battery module with reduced manufacturing cost, a battery pack, a vehicle and a method for manufacturing the battery pack. To achieve the above-described object, the battery module includes a plurality of battery cells standing in a vertical direction, including a pair of electrode terminals disposed on top and arranged in at least one direction, a cooling frame having an upper surface to which a bottom of the plurality of battery cells is fixed, and extending in a horizontal direction, an adhesive interposed between the plurality of battery cells and the cooling frame, and an upper frame configured to cover the plurality of battery cells.

## Description

### TECHNICAL FIELD

The present disclosure relates to a battery module, a battery pack comprising the same, a vehicle and a method for manufacturing the battery pack, and more particularly, to a battery module with reduced manufacturing cost, a battery pack comprising the same, a vehicle and a method for manufacturing the battery pack.

The present application claims the benefit of Korean Patent Application No. 10-2020-0073905 filed on June 17, 2020 with the Korean Intellectual Property Office, the disclosure of which is incorporated herein by reference in its entirety.

### BACKGROUND ART

Recently, with the rapid increase in demand for portable electronic products such as laptop computers, video cameras and mobile phones and the extensive development of electric vehicles, accumulators for energy storage, robots and satellites, many studies are being made on high performance secondary batteries that can be repeatedly recharged.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

A lithium secondary battery primarily uses a lithium-based oxide and a carbon material as a positive electrode active material and a negative electrode active material respectively. Additionally, the lithium secondary battery includes an electrode assembly including a positive electrode plate and a negative electrode plate coated with the positive electrode active material and the negative electrode active material respectively with a separator interposed between the positive electrode plate and the negative electrode plate, and a packaging or a battery case in which the electrode assembly is hermetically received together with an electrolyte solution.

Additionally, lithium secondary batteries may be classified into cylindrical secondary batteries including the electrode assembly embedded in a metal can and pouchtype secondary batteries including the electrode assembly embedded in a pouch of an aluminum laminate sheet according to the shape of the packaging.

Among them, the cylindrical secondary battery may include a cylindrical metal can in which the electrode assembly is embedded. A conventional battery module may include a module case in which a plurality of secondary batteries is received and busbars configured to electrically connect the plurality of cylindrical secondary batteries.

However, a large capacity battery pack includes a plurality of cylindrical secondary batteries, and to connect the plurality of cylindrical secondary batteries to the busbars by welding, welding equipment of wide area is required and it is difficult to uniformly perform many welding operations. This is a factor that increases the manufacturing cost of the battery pack and the defect rate.

Additionally, the plurality of secondary batteries may be embedded in a pack housing. In this case, when vibration or external impacts are applied to the battery pack, the pack housing may oscillate up and down at the center, or the pack housing may frequently deform, for example, bending up or down (swelling). When oscillation or bending of the pack housing repeatedly occurs, the pack housing may be damaged and the durability of the battery module may decrease.

In particular, when the battery module includes a plurality of secondary batteries, the deformation is severer at the center of the pack housing due to the weight of the plurality of secondary batteries, which aggravates the problem.

### DISCLOSURE

### Technical Problem

The present disclosure is designed to solve the above-described problem, and therefore the present disclosure is directed to providing a battery module with reduced manufacturing cost and improved mechanical strength, a battery pack including a plurality of battery modules, a vehicle comprising the battery pack and a method for manufacturing the battery pack.

These and other objects and advantages of the present disclosure may be understood by the following description, and will be apparent from the embodiments of the present disclosure. In addition, it will be readily appreciated that the objects and advantages of the present disclosure may be realized by means and combinations thereof.

### Technical Solution

To achieve the above-described object, a battery module according to the present disclosure includes a plurality of battery cells standing in a vertical direction, including a pair of electrode terminals disposed on top and arranged in at least one direction, a cooling frame having an upper surface to which a bottom of the plurality of battery cells is fixed, and extending in a horizontal direction, an adhesive interposed between the plurality of battery cells and the cooling frame, and an upper frame configured to cover the plurality of battery cells.

Additionally, the cooling frame may include a plurality of fixing protrusions configured to fix the bottom of each of the plurality of battery cells.

Moreover, the battery module may further include a plurality of busbars mounted on the upper frame and configured to contact the electrode terminal of each of the plurality of battery cells, and the busbars may include a plurality of conductive wires.

Furthermore, the upper frame may include an exposure portion which is open to expose the top of the plurality of battery cells, and a protruding portion which protrudes toward the electrode terminal to cover parts of the electrode terminal of each of the plurality of battery cells.

Additionally, the upper frame may include an upper wall disposed on the plurality of battery cells, and a sidewall configured to cover a side of the plurality of battery cells, a fastening portion having a fastening hole may be provided on a side of the sidewall of the upper frame, an insertion groove which runs in an upward direction may be provided on a bottom of the sidewall of the upper frame, and the cooling frame may include a coupling portion which protrudes in the upward direction on an outer periphery of the cooling frame.

Moreover, the battery module may further include a filter disposed around sides of the plurality of battery cells.

Additionally, to achieve the above-described object, a battery pack according to the present disclosure may include at least two battery modules.

Further, the battery pack further includes a pack housing having a receiving space in which the at least two battery modules are received.

Additionally, the battery pack may further include a reinforcement member fixed to at least one of an inner lower surface, an inner upper surface and an inner side surface of the pack housing.

Moreover, to achieve the above-described object, a vehicle according to the present disclosure includes the battery pack.

Additionally, to achieve the above-described object, a method for manufacturing a battery pack according to the present disclosure includes a fixing step of fixing a bottom of a plurality of battery cells to a cooling frame, a coupling step of coupling an upper frame configured to cover the plurality of battery cells to the cooling frame, a connecting step of connecting busbars to electrode terminals of each of the plurality of battery cells to establish an electrical connection between the plurality of battery cells, performing the fixing step, the coupling step and the connecting step at least two times in a sequential order to manufacture at least two battery modules, a fixing step of fixing the at least two battery modules into a pack housing, and adding an electrically insulating filler to at least one of inside of the battery module or inside of the pack housing and curing the filler.

### Advantageous Effects

According to an aspect of the present disclosure, the battery module of the present disclosure directly mounts the plurality of battery cells on the cooling frame instead of the module case, thereby effectively reducing the number of components, reducing the weight of the battery module, and saving the manufacturing cost of the battery module.

Additionally, the present disclosure includes the cooling frame having the upper surface to which the bottom of the plurality of battery cells is fixed and extending in the horizontal direction, and the adhesive interposed between the plurality of battery cells and the cooling frame, and thus the bottom of the plurality of battery cells may be directly fixed to the cooling frame using the adhesive, thereby transferring heat generated from the plurality of battery cells to the cooling frame with high thermal conductivity. Moreover, the present disclosure may easily fix the plurality of battery cells using the adhesive, thereby simplifying the manufacturing process, reducing the number of components, and saving the manufacturing cost.

Furthermore, according to an aspect of the present disclosure, the battery module of the present disclosure includes the insertion groove of the upper frame and the coupling portion of the cooling frame, thereby easily accomplishing coupling between the upper frame and the cooling frame. Further, the coupling portion of the cooling frame protruding in the upward direction and extending along the outer periphery may increase the mechanical strength of the cooling frame. In particular, when a force that vertically bends the cooling frame occurs, it is possible to increase the mechanical strength against such a force.

Further, according to an aspect of the present disclosure, in the manufacture of a large capacity battery pack, the related art inevitably uses a large-scale welding facility to perform a connection operation of a plurality of battery cells and busbars, requiring a high welding cost, but the present disclosure may manufacture at least two battery modules having an electrical connection already established between the plurality of battery cells and the busbars, and fix the manufactured battery modules to the pack housing. That is, in other words, since the present disclosure manufactures the plurality of battery cells by the unit such as the battery module, it may take a relative low welding cost using a small-scale welding facility. Accordingly, the present disclosure may manufacture the battery pack at a low manufacturing cost.

### BRIEF DESCRIPTION OF THE DRAWINGS

The accompanying drawings illustrate the preferred embodiments of the present disclosure, and together with the following detailed description, serve to provide a further understanding of the technical aspect of the present disclosure. However, the present disclosure should not be construed as being limited to the drawings.
FIG. 1 is a schematic perspective view of a battery pack according to an embodiment of the present disclosure.
FIG. 2 is a schematic exploded perspective view of a battery module according to an embodiment of the present disclosure.
FIG. 3 is a schematic exploded perspective view of the components of a battery module of FIG. 1.
FIG. 4 is a schematic perspective view showing the inner part of a battery pack according to an embodiment of the present disclosure.
FIG. 5 is a schematic vertical cross-sectional view of FIG. 3 taken along the line A-A'.
FIG. 6 is a schematic partial top view of the components of a battery module according to an embodiment of the present disclosure.
FIG. 7 is a schematic partial top view of the components of a battery module according to an embodiment of the present disclosure.
FIG. 8 is a schematic vertical cross-sectional view of a battery module of FIG. 2 taken along the line C-C'.
FIG. 9 is a schematic vertical cross-sectional view of the components of a battery pack according to another embodiment of the present disclosure.

### DETAILED DESCRIPTION

Hereinafter, the preferred embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are just a most preferred embodiment of the present disclosure, but not intended to fully describe the technical aspects of the present disclosure, so it should be understood that a variety of other equivalents and modifications could have been made thereto at the time that the application was filed.

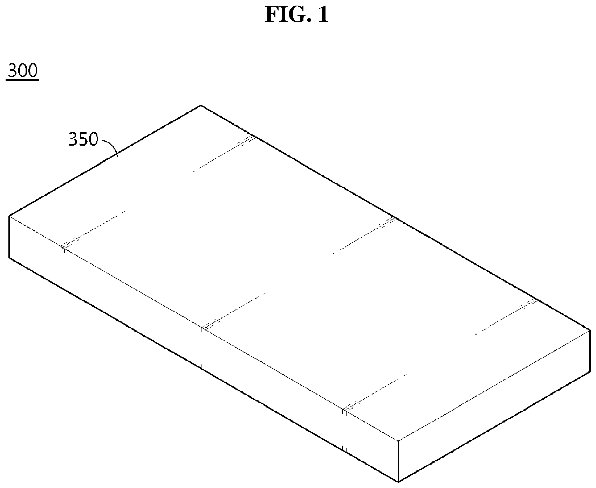

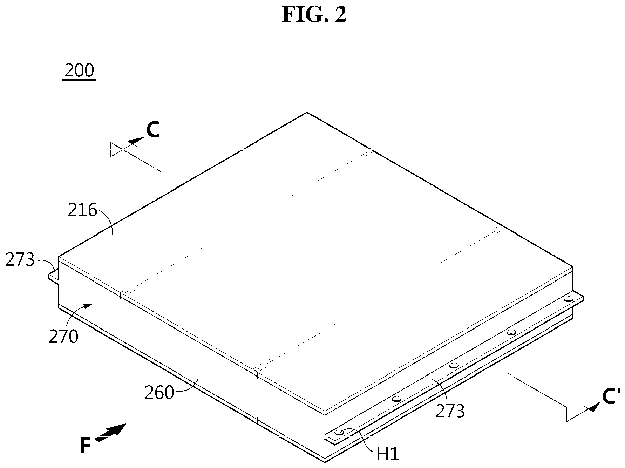

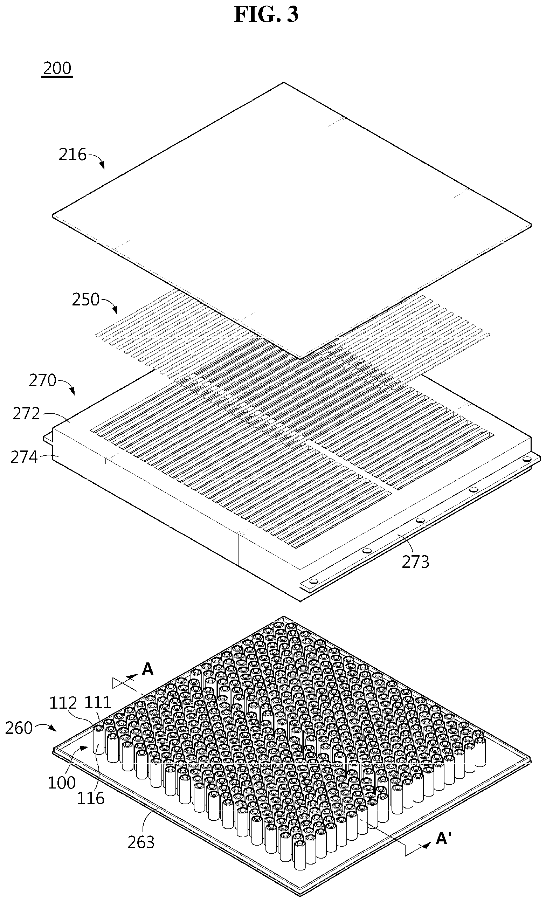

FIG. 1 is a schematic perspective view of a battery pack according to an embodiment of the present disclosure. FIG. 2 is a schematic exploded perspective view of a battery module according to an embodiment of the present disclosure. Furthermore, FIG. 3 is a schematic exploded perspective view of the components of the battery module of FIG. 1.

Referring to FIGS. 1 to 3, the battery module 200 of the present disclosure includes a plurality of battery cells 100, a cooling frame 260 and an upper frame 270.

Here, the battery cells 100 may stand in the vertical direction. Electrode terminals may be provided on top of the battery cells 100.

Specifically, the battery cells 100 may be cylindrical battery cells. The plurality of battery cells 100 may include a battery can 116 and an electrode assembly (not shown) received in the battery can 116. The negative electrode terminal 112 may be formed in the body of the battery can 116, and the positive electrode terminal 111 may be formed in a battery cap coupled to the top of the battery can 116.

Further, the plurality of battery cells 100 may be arranged in at least one direction. The plurality of battery cells 100 may be spaced a predetermined distance apart from each other. For example, when viewed from the direction F of FIG. 2, as shown in FIG. 3, the plurality of battery cells 100 may be arranged in the front-rear and left-right directions.

Meanwhile, the terms indicating directions as used herein such as front, rear, left, right, upper and lower may change depending on the position of an observer or the placement of the stated element. However, for convenience of description, the front, rear, left, right, upper and lower directions are distinguished with respect to the viewing direction F.

Moreover, the plurality of battery cells 100 may be, for example, spaced a distance of approximately 3 mm, apart from each other. Additionally, the plurality of battery cells 100 disposed in a row and the plurality of battery cells 100 disposed in another row may be arranged at different positions in the front-rear direction. Furthermore, the plurality of battery cells 100 disposed in a column and the plurality of battery cells 100 disposed in another column may be arranged at different positions in the left-right direction. That is, the plurality of battery cells 100 may be arranged in zigzag in the front-rear and left-right directions as a whole.

Additionally, the cooling frame 260 may be configured to absorb or release heat generated from the plurality of battery cells 100 during charging/discharging. For example, the cooling frame 260 may include a metal material having high thermal conductivity. For example, the metal material may include copper and aluminum.

Moreover, the cooling frame 260 may have a plate shape that extends in the horizontal direction. The bottom of the plurality of battery cells 100 may be fixed to the upper surface of the cooling frame 260 having plate shape.

Furthermore, the cooling frame 260 may be a heatsink having an inlet and an outlet where a refrigerant enters and exits, and a refrigerant channel in which the refrigerant moves. That is, the cooling frame 260 may include a barrier that forms the refrigerant channel. However, the present disclosure is not necessarily limited thereto, and any cooling structure for forcing heat generated from the plurality of battery cells 100 out may be applied.

According to this configuration of the present disclosure, the battery module 200 of the present disclosure directly mounts the plurality of battery cells 100 on the cooling frame 260 instead of the module case, thereby effectively reducing the number of components, reducing the weight of the battery module 200, increasing the energy density, and saving the manufacturing cost of the battery module 200.

Further, an adhesive 230 may be interposed between the plurality of battery cells 100 and the cooling frame 260. That is, the adhesive 230 may be added between the plurality of battery cells 100 and the cooling frame 260 to attach the bottom of each of the plurality of battery cells 100 to the upper surface of the cooling frame 260.

Additionally, the adhesive 230 is not limited to a particular material, and for example, the adhesive 230 may be a glue or a hot-melt resin. For example, the adhesive 230 may include at least one of a polyamide-based resin, a polyimide-based resin, an epoxybased resin or an acrylic resin.

Moreover, the upper frame 270 may be configured to cover the top and horizontal sides of the plurality of battery cells 100. The upper frame 270 may include an upper wall 272 that extends in the horizontal direction, and a sidewall 274 that extends in the downward direction from the outer periphery of the upper wall 272 to cover the top and the sides of the plurality of battery cells 100. The upper wall 272 may be disposed on the plurality of battery cells 100.

As described above, the battery module 200 according to the present disclosure has a structure including the cooling frame 260 having the upper surface to which the bottom of the plurality of battery cells 100 is fixed and extending in the horizontal direction, and the adhesive 230 interposed between the plurality of battery cells 100 and the cooling frame 260. That is, the battery module 200 is configured such that the bottom of the plurality of battery cells 100 is directly fixed to the cooling frame 260 using the adhesive 230. Accordingly, the battery module 200 may efficiently transfer heat generated from the plurality of battery cells 100 to the cooling frame 260. Moreover, the present disclosure may easily fix the plurality of battery cells 100 using the adhesive 230, simplify the manufacturing process, reduce the number of components, and achieve manufacturing cost savings.

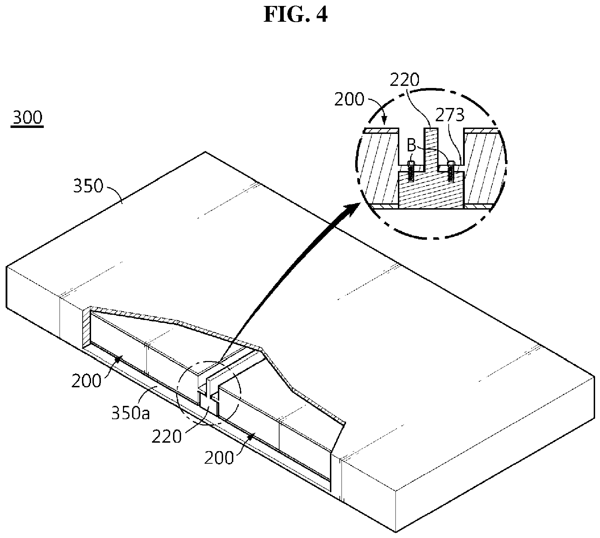

FIG. 4 is a schematic perspective view showing the inner part of the battery pack according to an embodiment of the present disclosure.

Referring to FIGS. 1 and 4, the battery pack 300 of the present disclosure may include a plurality of battery modules 200 and a pack housing 350. The plurality of battery modules 200 may be fixed into the pack housing 350 of the battery pack 300. For example, the bottom of each of the plurality of battery modules 200 may be adhered to the inner lower surface of the pack housing 350 using the adhesive 230.

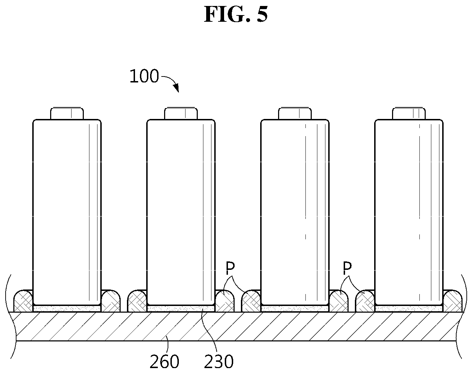

FIG. 5 is a schematic vertical cross-sectional view of FIG. 3 taken along the line A-A'.

Referring to FIGS. 3 and 5, the cooling frame 260 may include a plurality of fixing protrusions P configured to fix the bottom of each of the plurality of battery cells 100. The fixing protrusions P may protrude from the inner surface of the cooling frame 260 toward the battery cell 100 (in the upward direction) to guide the mount position of the plurality of battery cells 100.

That is, the fixing protrusion P may have a circular shape on the plane to surround the lower outer periphery of the battery cell 100. Additionally, one battery cell 100 may be mounted in the circular fixing protrusion P.

Additionally, the fixing protrusion P may accommodate the adhesive 230. The adhesive 230 may be configured to adhere the bottom of each of the plurality of battery cells 100 to the inner surface of the fixing protrusion P.

According to this configuration of the present disclosure, the present disclosure includes the fixing protrusions P on the upper surface of the cooling frame 260, so it is possible to easily place the plurality of battery cells 100 in position, and increase the adhesion area between the inner surface of the cooling frame 260 and the plurality of battery cells 100, thereby effectively increasing the adhesive strength.

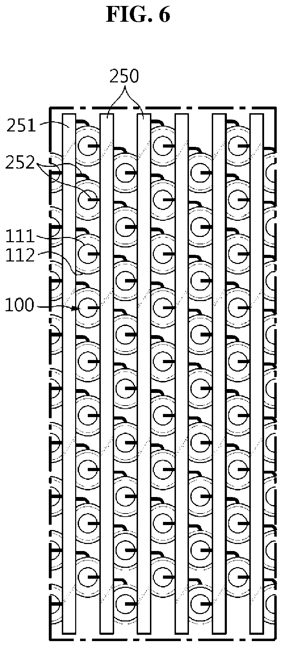

FIG. 6 is a schematic partial top view of the components of the battery module according to an embodiment of the present disclosure. FIG. 6 shows only the busbars 250 and the plurality of battery cells 100 to show the electrical connection between the busbars 250 and the plurality of battery cells 100, and does not show the remaining components.

Referring to FIG. 6 together with FIG. 3, the battery module 200 may further include the plurality of busbars 250. The busbars 250 may be configured to establish an electrical connection between the plurality of battery cells 100. The busbars 250 may include a conductive metal. For example, the busbars 250 may include at least one of copper, nickel or aluminum.

Additionally, the plurality of busbars 250 may be mounted on the upper frame 270. The busbars 250 may be configured to contact the electrode terminals 111, 112 of each of the plurality of battery cells 100. For example, the busbars 250 may include a body plate 251 that extends along the plurality of battery cells 100 and a plurality of conductive wires 252. The body plate 251 and the conductive wires 252 may be connected to each other. The conductive wires 252 may contact the positive electrode terminal 111 or the negative electrode terminal 112 formed on the plurality of battery cells 100 through an exposure portion T2 of the upper frame 270. The exposure portion T2 may be disposed on the upper wall 272 of the upper frame 270. The busbars 250 may electrically connect the plurality of battery cells 100 in series and/or in parallel.

The battery cell 100 of the present disclosure has a structure in which the pair of electrode terminals 111, 112 are provided in the same direction. This structure may bring electrical connection simplification. Additionally, this structure may allow the application of a structure in which a surface opposite to the surface where the electrode terminals 111, 112 are formed is directly coupled onto the cooling frame 260. As described above, both the positive electrode terminal 111 and the negative electrode terminal 112 of the battery cell 100 applied to the present disclosure are provided on one side of the battery cell 100. For example, when the battery cell 100 is a cylindrical battery cell, the top circumferential area of the battery can 116 acts as the negative electrode terminal 112, and the battery cap that covers the top opening of the battery can 116 acts as the positive electrode terminal 111. For example, the top circumferential area of the battery can 116 may refer to the upper surface of a crimping portion formed to fix the battery cap that covers the top opening of the battery can 116 and serves as the positive electrode terminal 111.

According to this configuration of the present disclosure, the present disclosure includes the busbars 250 including the plurality of conductive wires 252, thereby making precise contact with the electrode terminals 111, 112 provided on the plurality of battery cells 100. That is, the busbars 250 need to be configured to prevent an electrical short between the plurality of battery cells 100. In this instance, when the distance between the positive electrode terminal 111 and the negative electrode terminal 112 of the plurality of battery cells 100 is very short, a precise connection operation between the busbars 250 and the electrode terminals is necessary. Accordingly, the present disclosure may achieve a precise connection between the busbars 250 and the electrode terminals through the conductive wires, thereby reducing the risk of explosion or fires caused by an electrical short.

Besides, the battery module 200 of the present disclosure may further include an upper cover 216. The upper cover 216 may cover the top of the plurality of busbars 250 to preventing the busbars 250 from contacting another conductor. The upper cover 216 may have a plate shape that extends in the horizontal direction.

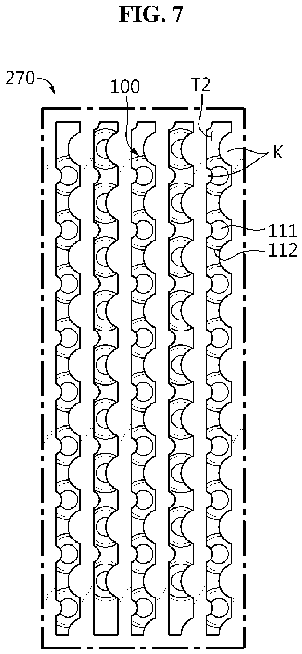

FIG. 7 is a schematic partial top view of the components of the battery module according to an embodiment of the present disclosure.

Referring to FIG. 7 together with FIG. 3, the upper frame 270 may include the exposure portion T2 that is open to expose the top of the plurality of battery cells 100.

The upper frame 270 of the pack housing 350 of the present disclosure may include a protruding portion K configured to cover parts of the electrode terminal of each of the plurality of battery cells 100. That is, the protruding portion K may protrude to cover parts of the positive electrode terminal 111 and/or the negative electrode terminal 112. The protruding portion K may have a protruding shape toward the electrode terminal.

For example, as shown in FIG. 7, any one of the plurality of protruding portions K may protrude and extend to prevent parts of the negative electrode terminal 112 provided on the battery cells 100 from being exposed upwards. Furthermore, the other may protrude and extend to prevent parts of the negative electrode terminal 112 provided on the battery cells 100 from being exposed upwards.

For example, among the plurality of conductive wires 252 of the busbars 250, the protruding portion K that protrudes covering parts of the negative electrode terminal 112 may be provided in a part of the upper frame 270 adjacent to the conductive wire 252 needed to be connected to the positive electrode terminal 111 to reduce the probability that the conductive wire 252 contacts the negative electrode terminal 112.

To the contrary, among the plurality of conductive wires 252 of the busbars 250, the protruding portion K that protrudes covering parts of the positive electrode terminal 111 may be provided in the other part of the upper frame 270 adjacent to the conductive wire 252 needed to be connected to the negative electrode terminal 112 to reduce the probability that the conductive wire 252 contacts the positive electrode terminal 111.

According to this configuration of the present disclosure, the upper frame 270 includes the protruding portions K that protrude toward the electrode terminals to cover parts of the electrode terminals of each of the plurality of battery cells 100, thereby effectively reducing the risk of an electrical short between the plurality of battery cells 100 during the connection operation between the busbars 250 and the electrode terminals. Accordingly, it is possible to increase the manufacturing efficiency of the battery pack 300 and effectively reduce accidents in the manufacturing process.

Referring back to FIGS. 2 and 3, the upper frame 270 of the battery module 200 of the present disclosure may include at least one fastening portion 273 formed in the sidewall 274. The fastening portion 273 may couple the battery module 200 to the pack housing 350 and/or another adjacent battery module 200. For example, the fastening portion 273 may have a fastening hole H1 for bolt fastening. When the battery module 200 is mounted on, for example, an inner lower surface 350a of the pack housing 350, the fastening hole H1 may be disposed at a location that is in communication with another fastening hole provided in the pack housing 350 and/or a fastening hole formed in a reinforcement member 220 as described below. That is, coupling between the battery module 200 and the pack housing 350 and/or coupling between the adjacent battery modules 200 may be accomplished by inserting a fastening bolt B into each of the fastening hole H1 of the upper frame 270 and another fastening hole.

As described above, the battery module 200 of the present disclosure includes the fastening portion 273 configured to be coupled with the pack housing 350 in the upper frame 270. Accordingly, the battery module 200 of the present disclosure may accomplish the bolt fastening of the upper frame 270 and the pack housing 350 without any separate member such as a bracket, thereby reducing the number of components, increasing the energy density of the battery pack, and saving the manufacturing cost.

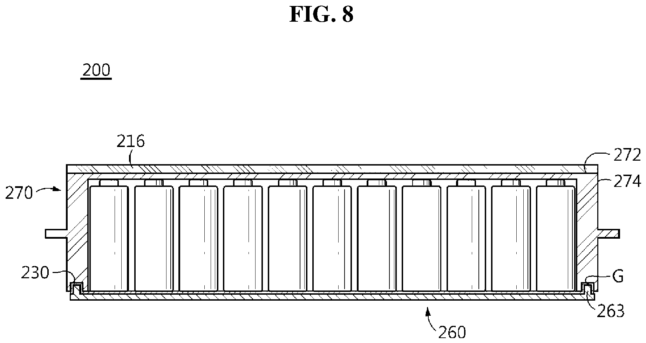

FIG. 8 is a schematic vertical cross-sectional view of the battery module of FIG. 2 taken along the line C-C'.

Referring to FIG. 8 together with FIGS. 2 and 3, the upper frame 270 of the present disclosure may include an insertion groove G that runs in the upward direction from the bottom of the sidewall 274. The insertion groove G may have a linear grove shape that extends along the bottom surface of the sidewall 274 of the upper frame 270. That is, when the upper frame 270 is viewed downward from the top, the insertion groove G may have a square shape.

Additionally, the cooling frame 260 may include a coupling portion 263 configured to be inserted into the insertion groove G. The coupling portion 263 may protrude in the upward direction from the horizontal outer periphery of the cooling frame 260. That is, the coupling portion 263 may be bent in the upward direction on the horizontal outer periphery of the cooling frame 260. In other words, the cooling frame 260 may have a tray shape having a sidewall on the outer periphery.

The coupling portion 263 may have a shape that is inserted into the internal space of the insertion groove G of the upper frame 270. That is, the coupling portion 263 and the insertion groove G of the upper frame 270 may be coupled face-to-face.

For example, as shown in FIG. 8, the insertion groove G may be formed on the bottom of the sidewall 274 of the upper frame 270. The cooling frame 260 may have the coupling portion 263 that protrudes in the upward direction to be inserted into the insertion groove G on the outer periphery. In other words, the insertion groove G may have a shape of an approximately "U" groove.

Moreover, the adhesive 230 may be interposed between the insertion groove G and the coupling portion 263. That is, the insertion groove G and the coupling portion 263 may be adhered and fixed to each other by the adhesive 230.

As described above, the battery module 200 of the present disclosure includes the insertion groove G in the upper frame 270 and the coupling portion 263 in the cooling frame 260, thereby easily accomplishing coupling between the upper frame 270 and the cooling frame 260. Moreover, the coupling portion 263 has a shape that protrudes in the upward direction from the cooling frame 260 and extends along the outer periphery of the cooling frame 260, thereby increasing the mechanical strength of the cooling frame 260. In particular, the cooling frame 260 has the above-described structure, thereby increasing the mechanical strength against a force that vertically bends the cooling frame 260 when such a force occurs.

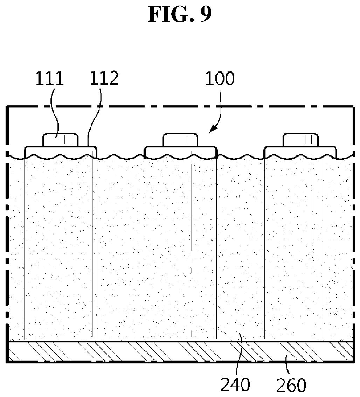

FIG. 9 is a schematic vertical cross-sectional view of the components of a battery pack according to another embodiment of the present disclosure.

Referring to FIG. 9 together with FIG. 4, the battery module 200 of the present disclosure may be equipped with a filler 240 inside. The filler 240 may include an electrically insulating material. The filler 240 may include a material having high heat resistant and insulating performance. Additionally, the filler 240 may be a polymer resin configured to be cured after it is filled in the battery module 200. For example, the filler 240 may be an epoxy resin.

Moreover, the filler 240 may be filled in the battery module 200 around the sides of each of the plurality of battery cells 100. That is, the filler 240 may be filled in the battery module 200 to such a height that the filler 240 does not cover the positive electrode terminal 111 and the negative electrode terminal 112 disposed on the plurality of battery cells 100.

For example, the filler 240 may be injected into the battery module 200 through the exposure portion T2 formed in the upper frame 270. The filler 240 injected into the battery module 200 may fill spaces between the adjacent battery cells 100.

As described above, since the battery module 200 of the present disclosure further includes the filler 240, it is possible to prevent an electrical short between the plurality of battery cells 100, and when thermal runaway or a fire occurs in any one of the plurality of battery cells 100, the side of the battery can may break to force flames out, thereby preventing the spread of heat or flames to another adjacent battery cell 100. That is, the filler 240 may block flames and heat of the battery cell 100, thereby effectively increasing the safety of the battery module 200.

Referring back to FIGS. 1 and 4, the battery pack 300 according to an embodiment of the present disclosure may include at least two battery modules 200. Additionally, the battery pack 300 may include the pack housing 350 having a receiving space for receiving the at least two battery modules 200. Furthermore, the battery pack 300 may further include various types of devices (not shown) for controlling the charge/discharge of the battery module 200, for example, a Battery Management System (BMS), a current sensor and a fuse.

Additionally, the battery pack 300 may further include a reinforcement member 220. The reinforcement member 220 may be fixed to at least one of the inner lower surface, the inner upper surface or the inner side surface of the pack housing 350. The reinforcement member 220 may be provided to reinforce the mechanical strength of the pack housing 350. For example, the reinforcement member 220 may be an H beam that extends in a direction.

For example, the reinforcement member 220 may be a beam shape that extends in the front-rear direction. The two ends (front and rear ends) of the reinforcement member 220 in the lengthwise direction may support the inner side surface of the pack housing 350, or may be coupled to the inner side surface.

Additionally, the reinforcement member 220 may be coupled to the pack housing 350 using a fastening means such as the adhesive 230 and/or a bolt.

As described above, the battery pack 300 of the present disclosure includes the reinforcement member 220, thereby reinforcing the mechanical strength of the battery pack 300. Accordingly, the present disclosure may prevent the pack housing 350 from bending up and down due to the weight of the plurality of battery cells 100 included in the large capacity battery pack 300 using the reinforcement member 220. Ultimately, it is possible to effectively increase the durability of the battery pack 300.

Meanwhile, referring to FIG. 4, the reinforcement member 220 may act as a support for coupling between the adjacent battery modules 200. The reinforcement member 220 may be interposed between the coupling portion 273 provided in each of the adjacent battery modules 200 and the lower surface 350a of the pack housing 350. In this case, the coupling portion 273 may be coupled to the reinforcement member 220 by bolting.

Although not shown in the drawing, the filler 240 having the electrically insulating property and heat resistance as described above may be filled in the internal space of the pack housing 350, i.e., the space between the pack housing 350 and the battery module 200.

Meanwhile, an electronic device (not shown) according to an embodiment of the present disclosure includes at least one battery pack 300. The electronic device may further include a device housing (not shown) having a receiving space for receiving the battery pack 300 and a display to allow a user to see the state of charge of the battery pack 300.

Additionally, the battery pack 300 according to an embodiment of the present disclosure may be included in a vehicle such as an electric vehicle or a hybrid electric vehicle. That is, the vehicle according to an embodiment of the present disclosure may include at least one battery pack 300 according to an embodiment of the present disclosure mounted in the vehicle body.

Meanwhile, a method for manufacturing the battery pack 300 according to an embodiment of the present disclosure includes a fixing step of fixing the bottom of the plurality of battery cells 100 to the cooling frame 260; a coupling step of coupling the upper frame 270 configured to cover the plurality of battery cells 100 to the cooling frame 260; a connecting step of connecting the busbars 250 to the electrode terminal (positive or negative electrode terminal) of each of the plurality of battery cells 100 to establish an electrical connection between the plurality of battery cells 100; performing the fixing step, the coupling step and the connecting step in a sequential order at least two times to manufacture at least two battery modules 200; and a fixing step of fixing the at least two battery modules 200 into the pack housing 350. In addition to the above-described fixing step, coupling step and connection step, the step of manufacturing the battery module 200 may further include a module filling step of filling the filler 240 having the electrically isolating property and heat resistance into the space between the battery cells 100 and the space between the battery cell 100 and the sidewall 274 of the upper frame 270. Meanwhile, in addition to the above-described steps, the manufacturing method may further include a pack filling step of curing the electrically insulating filler 240 added into the pack housing 350. That is, the method for manufacturing a battery pack according to an embodiment of the present disclosure may not include the step of filling the filler 240, the module filling step and/or the pack filling step.

Additionally, otherwise, the method for manufacturing a battery pack according to an embodiment of the present disclosure may further include an integrated filling step of combining the step of filling the battery module 200 and the step of filling the space between the battery module 200 and the pack housing 350 into one.

In this case, the filler 240 added into the pack housing 350 may be cured after it flows into the battery module 200 through a gap formed in at least a part of the battery module 200. For example, the gap may be formed between the upper frame 270 and the cooling frame 260, and the gap may be formed between the upper frame 270 and the busbars 250.

According to this configuration of the present disclosure, in the manufacture of the large capacity battery pack 300, the related art inevitably uses a large-scale welding facility to perform a connection operation of the plurality of battery cells 100 and the busbars 250, requiring a high welding cost, but the present disclosure may manufacture at least two battery modules 200 having an electrical connection already established between the plurality of battery cells 100 and the busbars 250, and fix the manufactured battery modules 200 to the pack housing 350. That is, in other words, since the present disclosure manufactures the plurality of battery cells by the unit such as the battery module, it takes a relative low welding cost using a small-scale welding facility. Accordingly, the present disclosure may manufacture the battery pack at a low manufacturing cost.

Meanwhile, the terms indicating directions as used herein such as upper, lower, left, right, front and rear are used for convenience of description, and it is obvious to those skilled in the art that the term may be subject to change depending on the position of the stated element or an observer.

While the present disclosure has been hereinabove described with regard to a limited number of embodiments and drawings, the present disclosure is not limited thereto and it is obvious to those skilled in the art that various modifications and changes may be made thereto within the technical aspects of the present disclosure and the equivalent scope of the appended claims.

## Claims

1. A battery module, comprising:
a plurality of battery cells standing in a vertical direction, including a pair of electrode terminals disposed on top, and arranged in at least one direction;
a cooling frame having an upper surface to which a bottom of the plurality of battery cells is fixed, and extending in a horizontal direction;
an adhesive interposed between the plurality of battery cells and the cooling frame; and
an upper frame configured to cover the plurality of battery cells.

2. The battery module according to claim 1, wherein the cooling frame includes a plurality of fixing protrusions configured to fix the bottom of each of the plurality of battery cells.

3. The battery module according to claim 1, further comprising:
a plurality of busbars mounted on the upper frame and configured to contact the electrode terminal of each of the plurality of battery cells,
wherein the busbars include a plurality of conductive wires.

4. The battery module according to claim 3, wherein the upper frame includes:
an exposure portion which is open to expose the top of the plurality of battery cells; and
a protruding portion which protrudes toward the electrode terminal to cover parts of the electrode terminal of each of the plurality of battery cells.

5. The battery module according to claim 1, wherein the upper frame includes an upper wall disposed on the plurality of battery cells, and a sidewall configured to cover a side of the plurality of battery cells,
a fastening portion having a fastening hole is provided on a side of the sidewall of the upper frame,
an insertion groove which runs in an upward direction is provided on a bottom of the sidewall of the upper frame, and
the cooling frame includes a coupling portion which protrudes in the upward direction on an outer periphery of the cooling frame.

6. The battery module according to claim 5, further comprising:
a filter disposed around sides of the plurality of battery cells.

7. A battery pack comprising at least two battery modules according to any one of claims 1 to 6, wherein the battery pack comprises a pack housing having a receiving space in which the at least two battery modules are received.

8. The battery pack according to claim 7, further comprising:
a reinforcement member fixed to at least one of an inner lower surface, an inner upper surface and an inner side surface of the pack housing.

9. A vehicle comprising the battery pack according to claim 7.

10. A method for manufacturing a battery pack, comprising:
a fixing step of fixing a bottom of a plurality of battery cells to a cooling frame;
a coupling step of coupling an upper frame configured to cover the plurality of battery cells to the cooling frame;
a connecting step of connecting busbars to electrode terminals of each of the plurality of battery cells to establish an electrical connection between the plurality of battery cells;
performing the fixing step, the coupling step and the connecting step at least two times in a sequential order to manufacture at least two battery modules;
a fixing step of fixing the at least two battery modules into a pack housing; and
adding an electrically insulating filler to at least one of inside of the battery module or inside of the pack housing and curing the filler.
